# EUROPÄISCHE PATENTANMELDUNG

(11) **EP 1 186 768 A2**
(43) Veröffentlichungstag der Anmeldung: **13.03.2002**
(21) Anmeldenummer: 01116367.2
(22) Anmeldetag: 06.07.2001
(51) Int. Cl.: F02M 35/024

(54) **Luftfiltereinrichtung für eine mehrzylindrige Brennkraftmaschine**

(30) Priorität: 05.09.2000 DE 10043532
(71) Anmelder: Dr.Ing. h.c.F. Porsche Aktiengesellschaft, 70435 Stuttgart (DE)
(72) Erfinder: Schorn, Jürgen, 71277 Rutesheim (DE)

(57) **Zusammenfassung**

Diese Luftfiltereinrichtung ist für eine Brennkraftmaschine geeignet, die in ein Kraftfahrzeug eingebaut wird. Die Brennkraftmaschine weist gegenüberliegende Zylinderreihen auf, und ihre Luftfiltereinrichtung umfasst ein Luftfilter aufnehmendes Luftfiltergehäuse mit zwei Einlassstutzen.

Zur Optimierung der Luftfiltereinrichtung sind die Einlassstutzen an Rohlufträume des Luftfiltergehäuses angeschlossen, die unter Zwischenschaltung von den Luftfiltern mit einem Reinluftraum verbunden sind. Von diesem Reinluftraum ist eine Zuführungsleitung zur Brennkraftmaschine verlegt.

## Beschreibung

Die Erfindung betrifft eine Luftfiltereinrichtung für eine mehrzylindrige Brennkraftmaschine zum Antrieb eines Kraftfahrzeugs, vorzugsweise mit gegenüberliegenden Zylinderreihen.

Eine bekannte Luftansauganlage, EP 0 456 957 A1, umfasst ein Gehäuse, das mit Gehäuseabschnitten entlang einer Stirnseite und von Längsseiten einer gegenüberliegende Zylinderreihen aufweisenden Brennkraftmaschine verläuft. Die beiden Gehäuseabschnitte der Luftansauganlage, die benachbart den Längsseiten der Brennkraftmaschine angeordnet sind, sind mit Ansaugleitungen versehen, an deren freien Enden Luftfilter angebracht sind.

In der FR 2 385 906 wird ein Luftfilter mit einem Gehäuse für eine Brennkraftmaschine behandelt, in das ein Ansauggeräuschdämpfer integriert ist. Das Gehäuse ist mit zwei trichterförmigen und horizontal ausgerichteten Ansaugstutzen versehen, die in Ringräume des Gehäuses münden. Eine vergleichbare Ausführung zeigt die EP 0 242 797 B1; allerdings sind die Ansaugstutzen dort mit Steuerklappen ausgestattet.

Es ist Aufgabe der Erfindung, eine Luftfiltereinrichtung für eine in ein Kraftfahrzeug einbaubare Brennkraftmaschine zu schaffen, die insbesondere bezüglich Durchströmung, Raumbedarf und Akustik optimiert ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Luftfiltereinrichtung bei entsprechender Konzeption eines Kraftfahrzeugs zwischen einem Aufbau und einer Brennkraftmaschine, ohne die freie Gestaltung von letzterer zu beeinträchtigen, räumlich günstig angeordnet werden kann. Dabei ist das gezielte akustische Abstimmen der Luftfiltereinrichtung auf einfache Weise möglich. Auch ist eine vorteilhafte Luftführung dadurch möglich, dass die Luft unter Durchströmung - mit vergleichsweise geringem Gegendruck - der Luftfilter von den Rohlufträumen in den Reinluftraum und von dort in die mit der Brennkraftmaschine verbundene Zuführungsleitung gelangt. Diese Luftführung wird auch durch die Anordnung und Ausbildung der beiden Einlassstutzen und der Zuführungsleitung unterstützt. Darüber hinaus lässt das Luftfiltergehäuse aufgrund seines konstruktiven Aufbaus eine Reihe von Lösungen, auch ästhetischer Art, zu. Schließlich können die Luftfilter bei den gegebenen räumlichen Verhältnissen hinsichtlich Luftfilterfläche optimiert werden, wobei deren Eingliederung in die Verbindungsvorrichtungen eine vortreffliche Lösung darstellt.

In der Zeichnung wird ein Ausführungsbeispiel der Erfindung gezeigt, das nachstehend näher beschrieben ist.

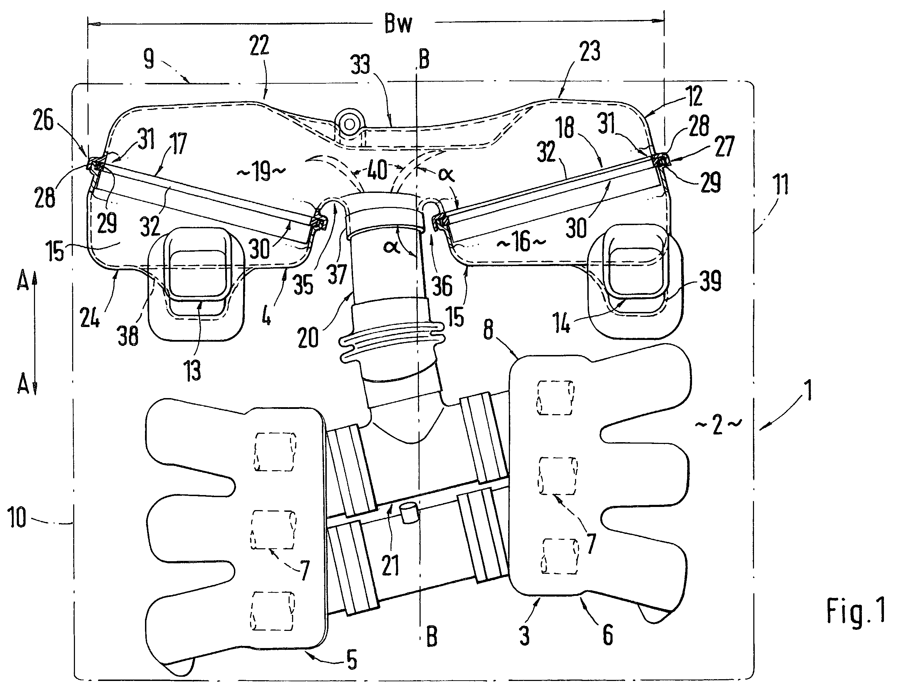

Es zeigen
- Fig.1: eine Ansicht von oben auf eine in ein Kraftfahrzeug eingebaute Brennkraftmaschine mit der erfindungsgemäßen Luftfiltereinrichtung;

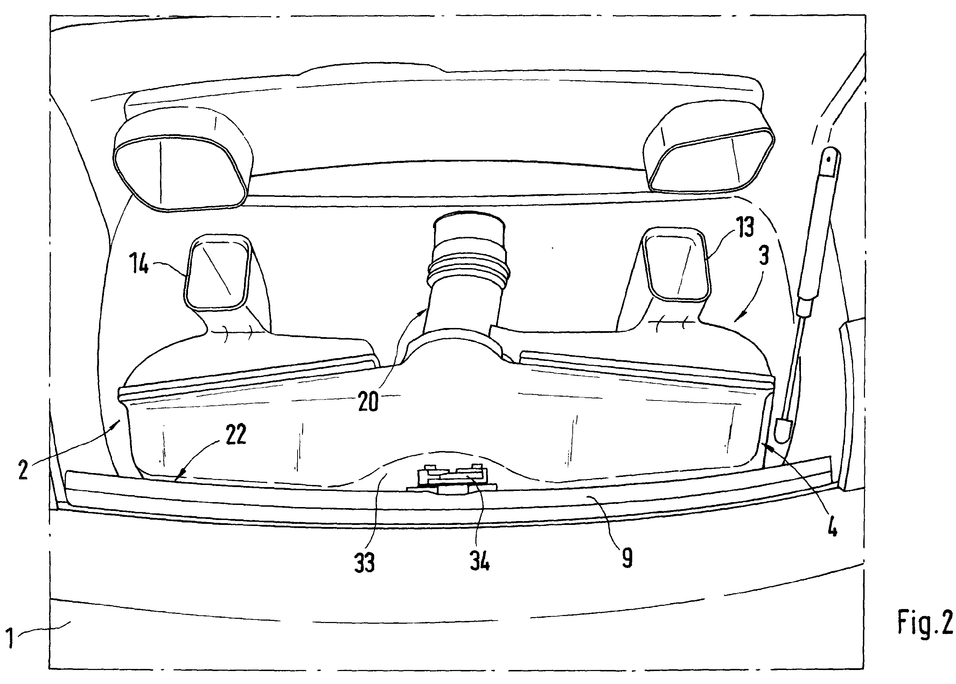

- Fig. 2: eine Schrägansicht von oben, und zwar von einer Endseite des Kraftfahrzeugs aus.

Von einem Kraftfahrzeug 1 ist lediglich ein Aggregateraum 2 dargestellt, in dem eine Brennkraftmaschine 3 untergebracht ist. Die mit einer Luftfiltereinrichtung 4 versehene Brennkraftmaschine 3 ist der Hubkolbenbauart zugehörig und umfasst gegenüberliegende Zylinderreihen 5,6, jeweils mit mehreren Zylindern 7, welche Zylinderreihen 5,6 V- oder boxerförmig zueinander angeordnet sind. Die Luftfiltereinrichtung 4 ist zwischen einer Stirnseite 8 der Brennkraftmaschine 3 sowie einer quer zur Fahrzeuglängsrichtung A-A verlaufenden endseitigen Begrenzung 9 des Aggregateraums 2 angeordnet und erstreckt sich bspw. über eine wesentliche Breite des Aggregateraums 2 bzw. zwischen in Fahrzeuglängsrichtung A-A ausgerichtete Aggregateraumbegrenzungen 10 und 11. Ein Luftfiltergehäuse 12 der Luftfiltereinrichtung 4 aus Kunststoff, Metall oder dergl. ist mit Einlassstutzen 13, 14 versehen, die beiderseits einer Längsmittelebene B-B der Brennkraftmaschine 1, die in etwa die Fahrzeuglängsmittelebene einschließt, an besagtem Luftfiltergehäuse 12 aufrecht stehend angebracht sind. Die Einlassstutzen 13,14 sind an Rohlufträume 15,16 angeschlossen, die unter Zwischenschaltung von Luftfiltern 17,18 mit einem Reinluftraum 19 verbunden ist. Vom Reinluftraum 19 ist eine sich in der Längsmittelebene B-B oder zumindest benachbart hierzu erstreckende Zuführungsleitung 20 zur Brennkraftmaschine 1 bzw. einer zwischen den Zylinderreihen 5,6 wirkenden Verteilerleitung 21 verlegt. Das Luftfiltergehäuse 12 ist derartig gestaltet, dass die Rohlufträume 15,16 mit den Einlassstutzen 13,14 der Stirnseite 8 zugekehrt sind und der Reinluftraum 18 sich auf einer der Stirnseite 8 abgekehrten Seite 22 erstreckt.

Das Luftfiltergehäuse 12 wird gebildet durch eine erste Gehäuseschale 23 für den Reinluftraum 19 und eine zweite Gehäuseschale 24 sowie eine dritte Gehäuseschalen 25 für die Rohlufträume 15,16. Die zweite und die dritte Gehäuseschale 24,25 sind unter Vermittlung von Verbindungsvorrichtungen 26,27 mit der ersten Gehäuseschale 23 verbunden. Jede Verbindungsvorrichtung z.B. 25 besitzt einen übergreifenden Flansch 28 und einen untergreifenden Flansch 29, die eine Aufnahme 30 für die Luftfilter 15,16 bilden. Anders ausgedrückt, die Flansche 27,28 bilden eine kanalartige Einformung 31, die einen am äußeren Umfang des jeweiligen Luftfilter vorgesehenen umlaufenden Halterand 32 formschlüssig in Lage halten.

Die erste Gehäuseschale 23 ist gegenüber der Begrenzung 9 mit einer Einformung 33 für Anbauteile 34 - hier ein Schloss - im Aggregateraum 2 versehen. Eine weitere Einformung 35 weist die erste Gehäuseschale 23 bei 36 auf, um einen Verbindungsstutzen 37 für die Zuführungsleitung 20 zu bilden. An der zweiten Gehäuseschale 24 und der dritten Gehäuseschale 25 sind für die Einlassstutzen 13,14 Ausformungen 38,39 vorgesehen, die definierte Strömungsverläufe zu den aufrecht stehenden Luftfiltern 15,16 bewirken, die im Stumpfen Winkel α zur Mittellängsebene B-B verlaufen. Außerdem sind im Reinluftraum 18 der ersten Gehäuseschale 22 Luftleitelemente 40 vorgesehen, die die von den Luftfiltern 15,16 kommenden Luftströme gerichtet in die Zuführungsleitung 20 steuern.

## Patentansprüche

1. Luftfiltereinrichtung für eine mehrzylindrige Brennkraftmaschine zum Antrieb eines Kraftfahrzeugs, vorzugsweise mit gegenüberliegenden Zylinderreihen, die ein Luftfilter aufnehmendes Luftfiltergehäuse mit zwei Einlassstutzen aufweist, **dadurch gekennzeichnet, dass** die Einlassstutzen (14,15) an Rohlufträume (15,16) des Luftfiltergehäuses (12) angeschlossen sind, die unter Zwischenschaltung von Luftfiltern (17,18) mit einem Reinluftraum (19) verbunden sind, von welchem Reinluftraum (19) eine Zuführungsleitung (20) zur Brennkraftmaschine (3) verlegt ist.

2. Luftfiltereinrichtung nach Anspruch 1, **dadurch gekennzeichnet, dass** die Rohlufträume (15,16) mit den Einlassstutzen (14,15) auf einer der Brennkraftmaschine (3) zugekehrten Seite verlaufen und sich der Reinluftraum (19) auf einer von der Brennkraftmaschine (3) abgekehrten Seite erstreckt.

3. Luftfiltereinrichtung nach Anspruch 1, **dadurch gekennzeichnet, dass** die Einlassstutzen (14,15) aufrecht stehend am Luftfiltergehäuse (12) angebracht sind.

4. Luftfiltereinrichtung nach den Ansprüchen 1 und 3, **dadurch gekennzeichnet, dass** die Einlassstutzen (14,15) außerhalb einer Mittellängsebene (B-B) der Brennkraftmaschine (3) am Luftfiltergehäuse (12) angebracht sind.

5. Luftfiltereinrichtung nach den Ansprüchen 1 und 4, **dadurch gekennzeichnet, dass** die Zuführungsleitung (20) zumindest benachbart der Mittellängsebene (B-B) der Brennkraftmaschine (3) verläuft.

6. Luftfiltereinrichtung nach den Ansprüchen 1 und 2, **dadurch gekennzeichnet, dass** das Luftfiltergehäuse (12) eine erste Gehäuseschale (23) für den Reinluftraum (19) und zweite und dritte Gehäuseschalen (24,25) für die Rohlufträume (15,16) aufweist.

7. Luftfiltereinrichtung nach Anspruch 7, **dadurch gekennzeichnet, dass** die zweite und die dritte Gehäuseschale (24,25) mittels Verbindungsvorrichtungen (26,27) mit der ersten Gehäuseschale (23) verbunden ist.

8. Luftfiltereinrichtung nach Anspruch 7, **dadurch gekennzeichnet, dass** jede Verbindungsvorrichtung (z.B. 26) übergreifende und untergreifende Flansche (28 und 29) umfasst.

9. Luftfiltereinrichtung nach den Ansprüchen 1 und 7, **dadurch gekennzeichnet, dass** die Verbindungsvorrichtungen (26,27) zur Aufnahme der Luftfilter (17,18) ausgebildet sind.

10. Luftfiltereinrichtung nach Anspruch 9, **dadurch gekennzeichnet, dass** jedes Luftfilter (z.B. 17) mittels eines Halterandes (32) formschlüssig in der jeweiligen Verbindungsvorrichtung (z.B. 26) in Lage gehalten wird.

11. Luftfiltereinrichtung nach einem oder mehreren der vorangehenden Ansprüche **dadurch gekennzeichnet, dass** die Luftfilter (17,18) im stumpfen Winkel (α) zur Mittellängsebene (B-B) der Brennkraftmaschine (3) verlaufen.

12. Luftfilterreinrichtung nach einem oder mehreren der vorangehenden Ansprüche, **dadurch gekennzeichnet, dass** im Reinluftraum (19) Luftleitelemente (40) vorgesehen sind

13. Luftfiltereinrichtung nach einem oder mehreren der vorangehenden Ansprüche, **dadurch gekennzeichnet, dass** die Luftleitelemente (40) benachbart der Zuführungsleitung (20) angeordnet sind.
